# EUROPÄISCHE PATENTSCHRIFT

(11) **EP 4 035 783 B1**
(45) Veröffentlichungstag und Bekanntmachung des Hinweises auf die Patenterteilung: **30.10.2024**
(21) Anmeldenummer: 22153172.6
(22) Anmeldetag: 25.01.2022
(51) Int. Cl.: B06B 1/16, E01C 19/38, E02D 3/074

(54) **UNWUCHTERREGER BAUKASTEN SYSTEM**
UNBALANCE EXCITER MODULAR SYSTEM
SYSTÈME MODULAIRE POUR EXCITATEURS À BALOURDS

(30) Priorität: 02.02.2021 DE 102021102346
(43) Veröffentlichungstag der Anmeldung: 03.08.2022
(73) Patentinhaber: Wacker Neuson Produktion GmbH & Co. KG, 85084 Reichertshofen (DE)
(72) Erfinder: FORSTNER, Florian, 84104 Rudelzhausen (DE); MÜLLER, Tobias, 97276 Margetshöchheim (DE); UNVERDORBEN, Walter, 85229 Markt Indersdorf (DE); WEBER, Lisa, 82229 Seefeld (DE)
(74) Vertreter: Müller Hoffmann & Partner

(56) Entgegenhaltungen:
- WO-A1-2006/001230
- DE-A1- 10 218 213
- DE-U- 1 932 414
- US-A- 4 389 137

## Beschreibung

Die Erfindung betrifft einen Unwuchterreger für Rüttelplatten sowie eine mit einem derartigen Unwuchterreger ausgestattete Rüttelplatte zur Bodenverdichtung.

Rüttelplatten, häufig auch als Vibrations- oder Bodenverdichtungsplatten bezeichnet, sind bekannt und werden unter anderem für die Bodenverdichtung eingesetzt. Dabei wird eine Bodenkontaktplatte durch einen Unwuchterreger in Schwingungen versetzt, die dann in den Boden zur Verdichtung eingeleitet werden. Die Bodenkontaktplatte und der darauf befindliche Unwuchterreger bilden eine sogenannte Untermasse, die mit einer Obermasse über eine Schwingungsentkopplungsvorrichtung (zum Beispiel Gummipuffer) verbunden und relativ zu dieser beweglich ist. An der Obermasse kann ein Antrieb, zum Beispiel ein Verbrennungsmotor oder ein Elektromotor vorgesehen sein. Ebenso kann an der Obermasse eine Führungseinrichtung, zum Beispiel ein Führungsbügel, für einen Bediener zum Führen der Rüttelplatte angebracht sein.

Der Unwuchterreger weist üblicherweise eine Unwuchtwelle auf, auf der eine Unwuchtmasse exzentrisch vorgesehen ist, so dass bei Rotation der Unwuchtwelle entsprechende Schwingungen generiert werden, so dass die daraus resultierenden Kräfte in den Boden eingeleitet werden.

Ebenso sind Unwuchterreger bekannt, bei denen zwei oder mehr Unwuchtwellen vorgesehen sind. Häufig werden so genannte Zwei-Wellen-Erreger eingesetzt, bei denen zwei Unwuchtwellen parallel zueinander und gegenläufig drehend vorhanden sind. Die Rotationsbewegung der beiden Unwuchtwellen kann z.B. durch eine Zahnradverbindung (Stirnradgetriebe) miteinander gekoppelt sein.

Der Antrieb der Unwuchtwelle - bzw. bei einem Zwei-Wellen-Erreger von einer der beiden Unwuchtwellen - erfolgt bei Geräten mit Verbrennungsmotor häufig über eine Fliehkraftkupplung und einen Riemenantrieb, der das Drehmoment von dem meist an der Obermasse vorhandenen Verbrennungsmotor auf den Unwuchterreger an der Untermasse überträgt. Zu diesem Zweck sind Riemenscheiben an der Obermasse und an der Untermasse (Unwuchtwelle) vorgesehen, über die ein zum Riementrieb gehörender Riemen, insbesondere ein Keilriemen geführt werden kann.

Alternativ ist es auch bekannt, dass die Unwuchtwelle direkt durch einen Elektromotor angetrieben wird, der zusammen mit der Unwuchtwelle im gleichen Gehäuse untergebracht ist.

In der DE 102 18 213 Al und der DE 19 32 414 U werden jeweils Unwuchterreger mit Elektronantrieb beschrieben.

In der WO 2006/001230 A1 und der US 4 389 137 A werden jeweils Unwuchterreger offenbart, die durch einen Verbrennungsmotor über einen Riementrieb angetrieben werden.

Für die Varianten mit Elektroantrieb und mit Verbrennungsmotor müssen dementsprechend bei der Produktion für den Unwuchterreger unterschiedliche Teile entwickelt, gefertigt und bevorratet werden. Außerdem muss die Peripherie der Gesamtgeräte auf die verschiedenen Varianten angepasst werden. Änderungen an einem Teil können dabei unter Umständen weitreichende Änderungen an weiteren Teilen des Geräts nach sich ziehen. Durch den Variantenreichtum wird außerdem die Montage komplexer und zeitintensiver. Damit steigen auch die Herstellkosten. Der Erfindung liegt die Aufgabe zugrunde, den Aufbau eines derartigen Unwuchterregers für eine Rüttelplatte dahingehend zu vereinfachen, dass die Bauteilevielfalt trotz eines bestehenden Variantenreichtums aufgrund unterschiedlicher Antriebsvarianten einer Rüttelplatte reduziert wird.

Erfindungsgemäß wird die Aufgabe dadurch gelöst, dass ein Unwuchterreger-Baukastensystem für einen Unwuchterreger für eine Rüttelplatte zur Bodenverdichtung, mit einem Erregergehäuse angegeben wird, das sowohl mit einer mechanisch angetriebenen Unwuchtwelle als auch mit einer intern elektrisch angetriebenen Unwuchtwelle betrieben werden kann.

Die Aufgabe wird durch ein Unwuchterreger-Baukastensystem mit den Merkmalen von Anspruch 1 gelöst. Der als Universalerreger, also für verschiedene Varianten dienende Unwuchterreger des Baukastensystems kann vorteilhaft in einer Rüttelplatte zur Bodenverdichtung eingesetzt werden. Vorteilhafte Ausgestaltungen der Erfindung sind in den abhängigen Ansprüchen angegeben.

Es wird ein Unwuchterreger-Baukastensystem für einen Unwuchterreger für eine Rüttelplatte zur Bodenverdichtung angegeben, mit wenigstens einer drehbar gelagerten Unwuchtwelle, auf der eine Unwuchtmasse vorgesehen ist, zum Erzeugen einer Unwucht; mit einem Erregergehäuse, das die Unwuchtwelle wenigstens teilweise umgibt; und mit wenigstens zwei Lagereinrichtungen zum drehbaren Lagern der Unwuchtwelle in dem Erregergehäuse; wobei die Unwuchtwelle zwei Lagersitze aufweist, an denen Lagereinrichtungen die Unwuchtwelle lagern; wobei das Erregergehäuse ein Mittelteil aufweist, das Erregergehäuse zwei stirnseitig zu dem Mittelteil angeordnete Stirnteile aufweist; wobei das Mittelteil eine hohlzylindrische Ausnehmung aufweist, in der für jede der Lagereinrichtungen eine Lagerstelle vorgesehen ist; wobei das Mittelteil dazu ausgebildet ist, um wahlweise eine Unwuchtwelle für eine von zwei unterschiedlichen Antriebsarten aufzunehmen; wobei eine erste Antriebsart vorgesehen ist, bei der der Unwuchterreger durch eine außerhalb des Erregergehäuses des Unwuchterregers vorgesehene Antriebsvorrichtung antreibbar ist; und wobei eine zweite Antriebsart vorgesehen ist, bei der der Unwuchterreger durch eine innerhalb des Erregergehäuses des Unwuchterregers vorgesehene Antriebsvorrichtung antreibbar ist.

Der Unwuchterreger weist somit ein Erregergehäuse mit einem Mittelteil auf, zu dem stirnseitig jeweils ein Stirnteil, zum Beispiel ein Deckelteil vorgesehen ist. Das Mittelteil kann mit seiner hohlzylindrischen Ausnehmung eine rohrförmige Ausbildung aufweisen. Zusätzlich zu dem Mittelteil und den beiden Stirnteilen (Deckelteilen) können noch weitere Komponenten als Teile des Erregergehäuses vorgesehen sein, zum Beispiel Zwischenstücke oder Zwischenhülsen.

Bei einem Unwuchterreger mit zwei Unwuchtwellen kann entsprechend das Mittelteil eine weitere hohlzylindrische Ausnehmung aufweisen. Alternativ kann ein weiteres Mittelteil mit einer hohlzylindrischen Ausnehmung zur Aufnahme der zweiten Unwuchtwelle vorgesehen sein. Bei dieser Variante können dann die beiden Mittelteile auch durch ein einstückiges gemeinsames Mittelteil gebildet werden.

Das Erregergehäuse ist derart gestaltet, dass es für zwei verschiedene Antriebsarten bestückt werden kann. Gemäß einer ersten Antriebsart kann der das Erregergehäuse aufweisende Unwuchterreger durch eine außerhalb des Unwuchterregers vorgesehene Antriebsvorrichtung, zum Beispiel einen Verbrennungsmotor angetrieben werden.

Gemäß einer zweiten Antriebsart kann alternativ auch im Inneren des Erregergehäuses eine Antriebsvorrichtung, zum Beispiel ein Elektromotor, untergebracht sein, der den Unwuchterreger antreibt.

Somit wird erfindungsgemäß ein Baukasten-System vorgeschlagen, bei dem ein in wesentlichen Komponenten (Mittelteil) identisches Erregergehäuse für Unwuchterreger mit verschiedenen Bauarten bzw. Bauprinzipien eingesetzt werden kann.

Durch die Ausgestaltung des Erregergehäuses, insbesondere des Mittelteils des Erregergehäuses, ist es möglich, dass das Erregergehäuse universell für die verschiedenen Antriebsarten bzw. Bauarten der Unwuchtwellen genutzt werden kann, ohne dass am Mittelteil des Erregergehäuses konstruktive oder bauliche Maßnahmen vorgenommen werden müssen. Auf diese Weise genügt es herstellerseitig, für den erfindungsgemäßen Unwuchterreger lediglich eine Art von Mittelteil herzustellen, das für unterschiedliche Anwendungsfälle genutzt werden kann.

Auch die Stirnteile bzw. Deckelteile können einheitlich genutzt werden. Hier kann es jedoch auch zweckmäßig sein, für die unterschiedlichen Antriebsarten und Unwuchtwellen-Bauarten unterschiedliche Stirn- bzw. Deckelteile bereitzustellen.

Der Unwuchterreger kann in an sich bekannter Weise auf der Oberseite einer Bodenkontaktplatte befestigt werden, um die durch den Erreger erzeugten Schwingungen über die Bodenkontaktplatte in den zu verdichtenden Boden einzuleiten. Dazu kann der Unwuchterreger z.B. über das Erregergehäuse mit der Bodenkontaktplatte verschraubt werden. Bei einer Variante können auch das Erregergehäuse - bzw. insbesondere das Mittelteil des Erregergehäuses - und die Bodenkontaktplatte als einstückiges Bauteil hergestellt werden, z.B. in Form eines Gussteils.

Zwischen den beiden Lagerstellen und damit zwischen den beiden Lagereinrichtungen kann ein Mittelbauraum ausgebildet sein, wobei das Mittelteil dazu ausgebildet sein kann, um entsprechend der gewählten Antriebsart wahlweise eine von zwei unterschiedlichen Bauarten von Unwuchtwellen aufzunehmen, nämlich für die erste Antriebsart eine erste Unwuchtwellen-Bauart, bei der die Unwuchtmasse in dem Mittelbauraum zwischen den beiden Lagersitzen vorgesehen ist und bei der die Unwuchtwelle außerhalb des Mittelbauraums einen Wellenfortsatz aufweist, über den die Unwuchtwelle durch einen außerhalb des Erregergehäuses vorgesehenen Antrieb antreibbar ist, oder für die zweite Antriebsart eine zweite Unwuchtwellen-Bauart, bei der die Unwuchtmasse außerhalb des Mittelbauraums angeordnet ist und bei der innerhalb des Mittelbauraums ein Elektromotor als Antrieb für den Unwuchterreger vorgesehen ist.

Bei der ersten Antriebsart bzw. der ersten Unwuchtwellen-Bauart soll die Unwuchtwelle durch einen außerhalb des Erregergehäuses vorgesehenen Antrieb angetrieben werden. Um das zu ermöglichen, weist die Unwuchtwelle einen aus dem Erregergehäuse vorstehenden Wellenfortsatz auf, über den die Unwuchtwelle antreibbar ist. Auf dem Wellenfortsatz kann eine geeignete Drehmomentübertragungseinrichtung vorgesehen sein, zum Einbringen eines Antriebsdrehmoments von dem Antrieb. Hierfür eignet sich zum Beispiel eine Riemenscheibe oder eine Keilriemenscheibe, über den der Antrieb, zum Beispiel ein Verbrennungsmotor oder ein Elektromotor, der außerhalb des Unwuchterregers vorgesehen ist, die Unwuchtwelle drehend antreiben kann.

Bei der zweiten Antriebsart bzw. der zweiten Unwuchtwellen-Bauart ist der Antrieb in Form des Elektromotors in den Unwuchterreger integriert. Für den Elektromotor muss dabei Platz im Inneren des Mittelteils in dem Mittelbauraum gefunden werden.

Bei der zweiten Unwuchtwellen-Bauart kann an der Unwuchtwelle auf beiden Stirnseiten jeweils ein Wellenfortsatz ausgebildet sein, auf dem jeweils eine Teilunwuchtmasse angeordnet sein kann. In diesem Fall kann die Unwuchtmasse in zwei Teilunwuchtmassen aufgeteilt sein, die jeweils auf den stirnseitigen Verlängerungen der Unwuchtwelle angeordnet sein können. Diese Verlängerungen bzw. Wellenfortsätze müssen dabei jedoch nicht außen an dem Erregergehäuse vorstehen, sondern können im Inneren des Erregergehäuses verbleiben bzw. durch entsprechende Deckelteile abgedeckt werden.

Bei der zweiten Unwuchtwellen-Bauart kann der Elektromotor einen Rotor aufweisen, der in einem Bereich zwischen den beiden Lagersitzen auf der Unwuchtwelle angeordnet sein kann. Der Rotor des Elektromotors ist in diesem Fall unmittelbar auf der Unwuchtwelle befestigt, was einen besonders kompakten Aufbau einerseits und einen direkten Antrieb der Unwuchtwelle andererseits ermöglicht.

Bei der zweiten Unwuchtwellen-Bauart kann der Elektromotor einen Stator aufweisen, der in einem Bereich zwischen den beiden Lagerstellen in das Mittelteil eingesetzt ist. Der Stator kann auf diese Weise direkt im Erregergehäuse befestigt werden, ohne dass weitere Teile erforderlich sind. Dabei ist es zum Beispiel möglich, dass der Stator direkt in das Mittelteil und damit das Erregergehäuse axial eingepresst wird, um den Stator mit geringstmöglichem Aufwand zu montieren.

In dem Bereich des Mittelteils zwischen den beiden Lagerstellen kann wenigstens ein Teilbereich vorgesehen sein, mit einer konischen Verjüngung. Dieser Teilbereich verläuft dementsprechend konisch bzw. verjüngt sich, damit der Stator von der Seite mit dem größeren Durchmesser eingepresst werden kann. Die konische Verjüngung stellt eine geringfügige Abweichung gegenüber der ansonsten hohlzylindrischen Ausnehmung im Mittelteil dar.

Der Stator kann somit in dem Bereich des Mittelteils zwischen den beiden Lagerstellen einpressbar sein, wobei in dem Bereich des Mittelteils zwischen den beiden Lagerstellen ein Montage-Anschlag vorgesehen sein kann. Der Montage-Anschlag kann zum Positionieren des Stators genutzt werden. Dabei ist es entweder möglich, dass der Stator gegen den Montage-Anschlag gedrückt wird und so seine bestimmungsgemäße Position erreicht. Ebenso ist es möglich, dass ein Einpresswerkzeug, mit dem der Stator in das Mittelteil eingepresst wird, gegen den Montage-Anschlag gedrückt wird, so dass die Position des Einpresswerkzeugs definiert ist, woraus auch eine definierte Position des Stators resultiert.

Bei der zweiten Antriebsart kann an der Außenseite des Mittelteils eine Klemmvorrichtung angeordnet sein, zum Zuführen von elektrischen Leitungen zu dem Stator des Elektromotors. In diesem Fall ist für den speziellen Fall der zweiten Antriebsart eine zusätzliche Bohrung im Mittelteil erforderlich, um Strom zu dem Elektroantrieb im Inneren des Mittelteils führen zu können. Insbesondere muss dann eine Stromleitung zum Stator geführt werden, die durch die Bohrung geleitet wird.

Da aber eine derartige Bohrung prinzipiell sehr leicht gefertigt werden kann und keine weiteren gestalterischen Änderungen erfordert, ist diese Zusatzarbeit ohne Weiteres vertretbar.

Somit ist das Erregergehäuse für beide Antriebsvarianten identisch. Lediglich für den Antrieb per Elektromotor kann noch eine Bohrung für die Kabel des Elektromotors vorgesehen sein.

Für beide Unwuchtwellen-Bauarten können identische Lagereinrichtungen vorgesehen sein. Somit müssen herstellerseitig für die beiden Antriebsarten auch keine unterschiedlichen Lagereinrichtungen bereitgestellt werden.

Die somit beschriebenen Varianten eignen sich insbesondere für einen sogenannten Ein-Wellen-Erreger, bei dem die Unwuchtkraft durch eine einzelne rotierende Unwuchtwelle erzeugt wird.

Die Varianten eignen sich aber auch für einen Zwei-Wellen-Erreger oder einen Mehr-Wellen-Erreger, bei dem zwei oder mehr Unwuchtwellen in einem Erregergehäuse drehend vorgesehen sind.

Auch bei einem derartigen Erreger mit z.B. zwei Unwuchtwellen kann das Erregergehäuse dementsprechend derart gestaltet sein, dass es gleichermaßen für die erste und die zweite Antriebsart geeignet ist. In diesem Fall ist somit eine der Unwuchtwellen geeignet, durch eine außerhalb des Erregergehäuses vorgesehene Antriebsvorrichtung, insbesondere durch einen von einem Elektro- oder Verbrennungsmotor angetriebenen Riementrieb angetrieben zu werden. Für die alternative zweite Antriebsart kann diese Unwuchtwelle auch durch einen innerhalb des Erregergehäuses vorgesehenen Elektromotor angetrieben werden.

Die angetriebene (erste) Unwuchtwelle kann wiederum die zweite Unwuchtwelle antreiben. Dazu können die erste und die zweite Unwuchtwelle z.B. durch ein Stirnradgetriebe miteinander gekoppelt sein, um z.B. eine gegenläufige Drehbewegung der beiden Unwuchtwellen zu bewirken.

Bei einer Variante kann die zweite Unwuchtwelle ihrerseits einen eigenen Elektromotor aufweisen bzw. durch diesen angetrieben werden. Damit ist ein Antrieb der zweiten Unwuchtwelle unabhängig von der ersten Unwuchtwelle möglich. Die erste Unwuchtwelle kann dementsprechend durch einen von einem Elektro- oder Verbrennungsmotor angetriebenen Riementrieb oder von einem eigenen integrierten Elektromotor angetrieben werden.

Dadurch, dass bei dieser Variante die beiden Unwuchtwellen getrennt voneinander angetrieben werden, ist es möglich, die Rotation beider Unwuchtwellen unabhängig voneinander zu steuern. Damit können bestimmte Schwingungsmuster erzeugt werden. Ebenso ist es möglich, den Richtungsvektor einer resultierenden Schwingung in gewünschter Weise einzustellen.

Durch den kompakten Aufbau des Elektromotors (oder der beiden Elektromotoren) und den baukastenartigen Aufbau des Erregergehäuses können somit verschiedene Varianten mit im Wesentlichen identischen Komponenten realisiert werden.

Der durch das erfindungsgemäße Unwuchterreger-Baukastensystem herstellbare Unwuchterreger kann vorteilhaft bei einer Rüttelplatte zur Bodenverdichtung verwendet werden, wobei die Rüttelplatte eine Antriebsvorrichtung zum Antreiben des Unwuchterregers aufweist und im Fall der ersten Antriebsart der Antriebsvorrichtung einen außerhalb des Erregergehäuses des Unwuchterregers vorgesehenen Verbrennungsmotor oder Elektromotor aufweist, und wobei im Fall der zweiten Antriebsart die Antriebsvorrichtung den innerhalb des Erregergehäuses des Unwuchterregers vorgesehenen Elektromotor aufweist.

Diese weiteren Vorteile und Merkmale der Erfindung werden nachfolgend anhand von Beispielen unter Zuhilfenahme der begleitenden Figuren näher erläutert. Es zeigen:
- **Fig. 1**: in Perspektivansicht einen Unwuchterreger für eine erste Antriebsart durch einen außerhalb des Unwuchterregers vorgesehenen Antriebsmotor;
- **Fig. 2**: einen Vertikalschnitt durch den Unwuchterreger von Fig. 1;
- **Fig. 3**: in Perspektivansicht einen Unwuchterreger gemäß einer zweiten Antriebsart für einen innerhalb des Unwuchterregers vorgesehenen Antrieb;
- **Fig. 4**: einen Vertikalschnitt durch den Unwuchterreger von Fig. 3; und
- **Fig. 5**: eine perspektivische Schnittdarstellung eines Mittelteils des Erregergehäuses der Unwuchterreger von Fig. 1 bis 4.

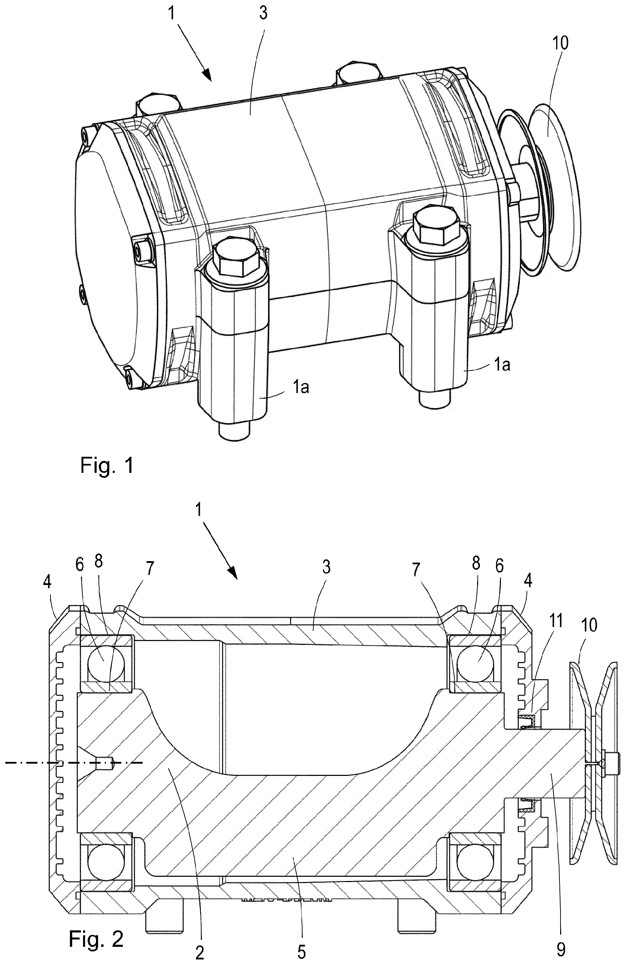

Die Fig. 1 und 2 zeigen einen Unwuchterreger für eine erste Antriebsart in Perspektiv- und Schnittdarstellung.

Der Unwuchterreger weist ein Erregergehäuse 1 auf, in dem eine Unwuchtwelle 2 drehbar gelagert ist. Das Erregergehäuse 1 kann mittels Schraubverbindungen 1a auf einer nicht gezeigten Bodenkontaktplatte befestigt werden, um auf diese Weise die von dem Unwuchterreger erzeugten Schwingungen wirksam zur Bodenverdichtung durch die Bodenkontaktplatte nutzen zu können.

Bei einer nicht in den Figuren dargestellten Variante kann das Erregergehäuse auch einstückig bzw. integral mit der Bodenkontaktplatte hergestellt sein. Z.B. können das Erregergehäuse und die Bodenkontaktplatte als ein Gussteil hergestellt sein.

Das Erregergehäuse 1 weist ein Mittelteil 3 und zwei stirnseitig zu dem Mittelteil 3 angeordnete Stirnteile 4 auf.

Bei der nicht dargestellten Variante, bei der das Erregergehäuse einstückig mit der Bodenkontaktplatte hergestellt ist, kann demnach insbesondere das Mittelteil des Erregergehäuses einstückig mit der Bodenkontaktplatte hergestellt sein, z.B. in Form eines integralen Gussteils.

Auf der Unwuchtwelle 2 ist eine Unwuchtmasse 5 vorgesehen, die in bekannter Weise bei Rotation der Unwuchtwelle 2 um ihre Mittelachse bzw. Drehachse X die gewünschte umlaufende Unwuchtkraft erzeugt, die in einer Rüttelplatte zur Bodenverdichtung genutzt werden kann.

Die Unwuchtwelle 2 ist über zwei Lager 6 drehbar in dem Mittelteil 3 des Erregergehäuses 1 gelagert. Dazu weist die Unwuchtwelle 2 zwei Lagersitze 7 auf. Entsprechend sind in dem Mittelteil zwei Lagerstellen 8 vorgesehen, an denen die Außenringe der Lager 6 anliegen.

Bei den Lagern 6 kann es sich - wie in Fig. 2 gezeigt - um Wälzlager (hier: Rillenkugellager) handeln, die je nach Festigkeitsanforderung ausgelegt sein können. Hierfür eignen sich insbesondere die in Fig. 2 gezeigten Rillenkugellager, aber auch Zylinderrollenlager etc.. Alternativ können die Lager 6 auch als Gleitlager ausgebildet sein.

Die Unwuchtwelle 2 weist an einem stirnseitigen Ende einen Wellenfortsatz 9 auf, an dessen Ende eine Riemenscheibe 10 angebracht ist.

Die Stirnteile 4 dienen auch als Deckelteile, wobei ein Stirnteil 4 (in Fig. 2 das linke) vollständig geschlossen ist, während das andere Stirnteil 4 (in Fig. 2 das rechte) eine Durchgangsbohrung aufweist, durch die der Wellenfortsatz 9 der Unwuchtwelle 2 geführt ist.

Der Spalt zwischen dem Stirnteil 4 und dem Wellenfortsatz 9 ist durch eine Dichtung 11 abgedichtet.

Über die Riemenscheibe 10 und einen nicht dargestellten Riementrieb kann die Unwuchtwelle 2 durch einen außerhalb des in den Figuren gezeigten Unwuchterregers, insbesondere einen außerhalb des Erregergehäuses 1 vorgesehenen Antriebsmotor angetrieben werden. Anstelle der Riemenscheibe 10 kann auch eine andere Einrichtung zur Drehmomenteinleitung in die Unwuchtwelle 2 genutzt werden.

Als Antriebsmotor eignet sich zum Beispiel ein Verbrennungsmotor oder ein Elektromotor. Der Antrieb durch eine derartige außerhalb des Erregergehäuses 1 des Unwuchterregers vorgesehene Antriebsvorrichtung wird als erste Antriebsart verstanden.

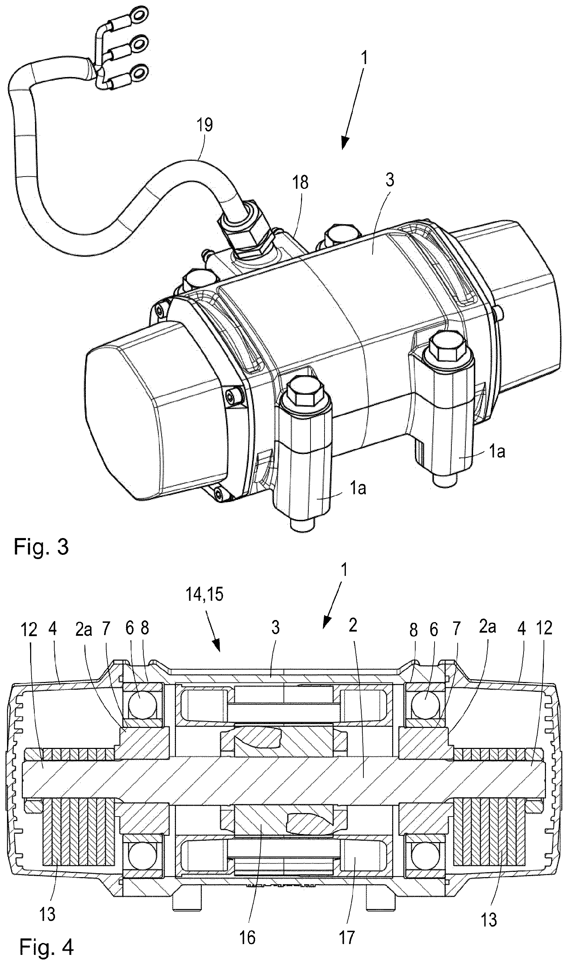

Die Fig. 3 und 4 zeigen einen Unwuchterreger für eine zweite Antriebsart in Perspektiv- und Schnittdarstellung. Gleiche oder sinngemäß gleiche Bauelemente wie bei der Ausführungsform der Fig. 1 und 2 werden mit gleichen Bezugszeichen bezeichnet.

Bei dieser Ausführungsform ist ebenfalls ein Erregergehäuse 1 mit dem Mittelteil 3 vorgesehen. Das Mittelteil 3 ist identisch zu dem Mittelteil 3 der Ausführungsform von Fig. 1 und 2 ausgebildet. Als Teil des Erregergehäuses dienen zudem die beiden Stirnteile 4. Während die Stirnteile 4 der ersten Ausführungsform eher flach gestaltet sind (Fig. 2), sind die Stirnteile 4 der zweiten Ausführungsform (Fig. 4) kappenähnlich ausgewölbt, um die Unwuchtwelle 2 zu umschließen. Dafür ist es möglich, dass die Stirnteile 4 bei der zweiten Ausführungsform identisch sind. Insbesondere wird dabei kein Stirnteil 4 mit einer Durchgangsbohrung benötigt, wie das bei der ersten Ausführungsform der Fall ist.

Im Inneren des Erregergehäuses 1 ist die Unwuchtwelle 2 angeordnet, bei der an beiden stirnseitigen Enden Wellenfortsätze 12 vorhanden sind, auf denen jeweils Teilunwuchtmassen 13 angebracht sind. Die Teilunwuchtmassen 13 können in ihrer Gesamtwirkung der Unwuchtwirkung der Unwuchtmasse 5 der ersten Ausführungsform entsprechen.

Teil der Unwuchtwelle 2 sind auch Lagerringe 2a, auf denen die Lagersitze 7 für die Lager 6 vorhanden sind. Auf diese Weise ist auch bei dieser Ausführungsform die Unwuchtwelle 2 an Lagerstellen 8 im Inneren des Mittelteils 3 des Erregergehäuses 1 angeordnet. Bei beiden Antriebsarten kann somit die identische Lagerung genutzt werden.

Zwischen den beiden Lagern 6 ist ein Raum ausgebildet, der als Mittelbauraum 14 bezeichnet wird und in dem ein Elektromotor 15 angeordnet ist. Der Elektromotor 15 weist einen Rotor 16 und einen Stator 17 auf. Der Rotor 16 ist in geeigneter Weise auf der Unwuchtwelle 2 befestigt, zum Beispiel durch Aufpressen. Der Stator 17 ist in die Ausnehmung des Mittelteils 3 eingepresst. Auf diese Weise kann in sehr einfacher Weise im Inneren des Mittelteils 3 der Elektromotor 15 mit der Unwuchtwelle 2 eingebaut werden.

Als zweite Antriebsart wird somit eine Variante verstanden, bei der der Unwuchterreger durch eine innerhalb des Erregergehäuses 1 vorgesehene Antriebsvorrichtung antreibbar ist. Bei dieser Antriebsvorrichtung handelt es sich im vorliegenden Fall um den Elektromotor 15.

An der Außenseite des Mittelteils 3 ist zudem ein Klemmenkasten 18 vorgesehen, zum Anschließen einer elektrischen Zuleitung 19 für den Elektromotor 15 im Inneren des Erregergehäuses 1. Zur Zuführung der elektrischen Zuleitung 19 ist im Mittelteil 3 eine in den Figuren nicht gezeigte Bohrung vorgesehen.

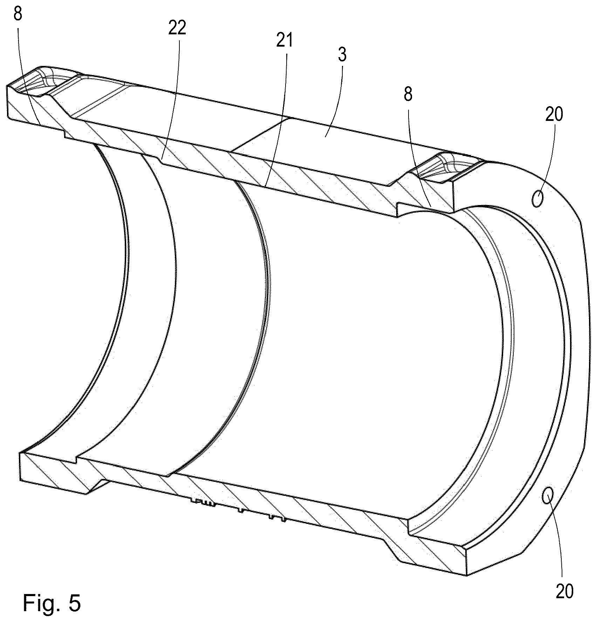

Fig. 5 zeigt das Mittelteil 3 in Schnittdarstellung.

Das Mittelteil 3 weist eine im Wesentlichen hohlzylindrische Ausnehmung auf. An den stirnseitigen Enden sind die Lagerstellen 8 vorgesehen, wie oben schon erläutert.

Stirnseitig können zudem Bohrungen 20 vorhanden sein, an denen die Stirnteile 4 angeschraubt werden können.

Im Inneren des Mittelteils 3 kann mit geringem Steigungswinkel eine konische Verjüngung 21 ausgebildet sein, die es ermöglicht, den Stator 17 (Fig. 4) axial gegen die konische Verjüngung einzupressen und festzuklemmen.

Zur Definition der Anpresslage ist ein Anschlag 22 vorhanden, an dem ein Einpresswerkzeug beim Einpressen des Stators 17 anschlagen kann, damit der Stator 17 die gewünschte axiale Position in der konischen Verjüngung 21 einnimmt.

Das Mittelteil 3 kann erfindungsgemäß bei beiden Varianten des Unwuchterregers, also bei der ersten und bei der zweiten Antriebsart verwendet werden. Dies erlaubt es, für die Herstellung des Unwuchterregers nur eine Bauart eines Mittelteils 3 für das Erregergehäuse 1 herzustellen und auf Lager zu legen. Die sonst aufgrund der verschiedenen Antriebsvarianten erforderliche Teilevielfalt kann damit vermieden werden.

## Patentansprüche

1. Unwuchterreger-Baukastensystem für einen Unwuchterreger für eine Rüttelplatte zur Bodenverdichtung, mit
- zwei unterschiedlichen Bauarten von drehbar gelagerten Unwuchtwellen (2), auf denen jeweils eine Unwuchtmasse (5, 13) vorgesehen ist, zum Erzeugen einer Unwucht, wobei die zwei unterschiedlichen Bauarten für zwei unterschiedliche Antriebsarten vorgesehen sind;
- einem Erregergehäuse (1), das die Unwuchtwelle (2) wenigstens teilweise umgibt; und mit
- wenigstens zwei Lagereinrichtungen (6) zum drehbaren Lagern der Unwuchtwelle (2) in dem Erregergehäuse (1), wobei die Unwuchtwelle (2) zwei Lagersitze (7) aufweist, an denen Lagereinrichtungen (6) die Unwuchtwelle (2) lagern; wobei
- das Erregergehäuse (1) ein Mittelteil (3) aufweist;
- das Erregergehäuse (1) zwei stirnseitig zu dem Mittelteil (3) angeordnete Stirnteile (4) aufweist;
- das Mittelteil (3) eine hohlzylindrische Ausnehmung aufweist, in der für jede der Lagereinrichtungen (6) eine Lagerstelle (8) vorgesehen ist;
- das Mitteilteil (3) dazu ausgebildet ist, um wahlweise eine der Unwuchtwellen (2) für eine der zwei unterschiedlichen Antriebsarten, nämlich eine erste Antriebsart und eine zweite Antriebsart, aufzunehmen;
- das Mittelteil für beide Antriebsarten identisch ist, während die jeweiligen Unwuchtwellen für die beiden Antriebsarten unterschiedlich sind;
- das Baukastensystem für einen Unwuchterreger gemäß der ersten Antriebsart ausgebildet ist, bei der der Unwuchterreger durch eine außerhalb des Erregergehäuses (1) des Unwuchterregers vorgesehene Antriebsvorrichtung antreibbar ist; und wobei
- das Baukastensystem für einen Unwuchterreger gemäß der zweiten Antriebsart ausgebildet ist, bei der der Unwuchterreger durch eine innerhalb des Erregergehäuses (1) des Unwuchterregers vorgesehene Antriebsvorrichtung (15) antreibbar ist.

2. Unwuchterreger-Baukastensystem nach Anspruch 1, wobei
- zwischen den beiden Lagerstellen (8) und damit zwischen den beiden Lagereinrichtungen (6) ein Mittelbauraum (14) ausgebildet ist; und wobei
- das Mittelteil (3) dazu ausgebildet ist, um entsprechend der gewählten Antriebsart wahlweise eine der zwei unterschiedlichen Bauarten von Unwuchtwellen (2) aufzunehmen, nämlich
- für die erste Antriebsart eine erste Unwuchtwellen-Bauart, bei der die Unwuchtmasse (5) in dem Mittelbauraum (14) vorgesehen ist und bei der die Unwuchtwelle (2) außerhalb des Mittelbauraums (14) einen Wellenfortsatz (9) aufweist, über den die Unwuchtwelle (2) durch einen außerhalb des Erregergehäuses (1) vorgesehenen Antrieb antreibbar ist; oder
- für die zweite Antriebsart eine zweite Unwuchtwellen-Bauart, bei der die Unwuchtmasse außerhalb des Mittelbauraums (14) angeordnet ist und bei der innerhalb des Mittelbauraums (14) ein Elektromotor (15) als Antrieb für den Unwuchterreger vorgesehen ist.

3. Unwuchterreger-Baukastensystem nach Anspruch 2, wobei bei der ersten Unwuchtwellen-Bauart der Wellenfortsatz (9) der Unwuchtwelle (2) eine Drehmomentübertragungseinrichtung (10) trägt, zum Einbringen eines Antriebsdrehmoments von dem Antrieb.

4. Unwuchterreger-Baukastensystem nach Anspruch 2 oder 3, wobei bei der zweiten Unwuchtwellen-Bauart an der Unwuchtwelle (2) auf beiden Stirnseiten jeweils ein Wellenfortsatz (12) ausgebildet ist, auf dem jeweils eine Teilunwuchtmasse (13) angeordnet ist.

5. Unwuchterreger-Baukastensystem nach einem der vorstehenden Ansprüche, wobei bei der zweiten Unwuchtwellen-Bauart der Elektromotor (15) einen Rotor (16) aufweist, der in einem Bereich zwischen den beiden Lagersitzen (7) auf der Unwuchtwelle (2) angeordnet ist.

6. Unwuchterreger-Baukastensystem nach einem der vorstehenden Ansprüche, wobei bei der zweiten Unwuchtwellen-Bauart der Elektromotor (15) einen Stator (17) aufweist, der in einen Bereich zwischen den beiden Lagerstellen (8) in das Mittelteil (3) eingesetzt ist.

7. Unwuchterreger-Baukastensystem nach einem der vorstehenden Ansprüche, wobei in dem Bereich des Mitteilteils (3) zwischen den beiden Lagerstellen (8) wenigstens ein Teilbereich vorgesehen ist, mit einer konischen Verjüngung (21).

8. Unwuchterreger-Baukastensystem nach einem der vorstehenden Ansprüche, wobei
- der Stator (19) in den Bereich des Mittelteils (3) zwischen den beiden Lagerstellen (8) einpressbar ist; und wobei
- in dem Bereich des Mitteilteils (3) zwischen den beiden Lagerstellen (8) ein Montage-Anschlag (22) vorgesehen ist.

9. Unwuchterreger-Baukastensystem nach einem der vorstehenden Ansprüche, wobei bei der zweiten Antriebsart an der Außenseite des Mittelteils (3) eine Klemmvorrichtung (18) angeordnet ist, zum Zuführen von elektrischen Leitungen (19) zu dem Stator (17) des Elektromotors (15).

10. Unwuchterreger-Baukastensystem nach einem der vorstehenden Ansprüche, wobei für beide Unwuchtwellen-Bauarten identische Lagereinrichtungen (6) vorgesehen sind.

11. Unwuchterreger-Baukastensystem nach einem der vorstehenden Ansprüche, wobei
- wenigstens zwei oder mehr drehbar gelagerte Unwuchtwellen (2) vorgesehen sind, auf denen jeweils eine Unwuchtmasse (5, 13) vorgesehen ist, zum Erzeugen einer Unwucht; und wobei
- die Unwuchtwellen (2) gemeinsam in dem Erregergehäuse (1) gelagert sind.

12. Rüttelplatte zur Bodenverdichtung, mit einem Unwuchterreger-Baukastensystem nach einem der vorstehenden Ansprüche, mit einer Antriebsvorrichtung zum Antreiben des Unwuchterregers, wobei
- im Fall der ersten Antriebsart die Antriebsvorrichtung einen außerhalb des Erregergehäuses (1) des Unwuchterregers vorgesehenen Verbrennungsmotor oder Elektromotor aufweist; und wobei
- im Fall der zweiten Antriebsart die Antriebsvorrichtung den innerhalb des Erregergehäuses (1) des Unwuchterregers vorgesehenen Elektromotor (15) aufweist.

## Claims

1. Unbalance exciter modular system for an unbalance exciter for a vibratory plate for ground compaction, comprising:
- two different designs of rotatably mounted unbalance shafts (2), on which an unbalance mass (5, 13) is provided in each case in order to generate an unbalance, wherein the two different designs are provided for two different drive types;
- an exciter housing (1) which at least partly surrounds the unbalance shaft (2); and comprising
- at least two bearing devices (6) for the rotatable mounting of the unbalance shaft (2) in the exciter housing (1), wherein the unbalance shaft (2) has two bearing seats (7), on which bearing devices (6) mount the unbalance shaft (2); wherein
- the exciter housing (1) has a central part (3);
- the exciter housing (1) has two end parts (4) which are arranged at ends of the central part (3);
- the central part (3) has a hollow-cylindrical recess, in which one bearing point (8) is provided for each of the bearing devices (6);
- the central part (3) is designed to optionally accommodate one of the unbalance shafts (2) for one of the two different drive types, namely a first drive type and a second drive type;
- the central part is identical for both drive types, whereas the respective unbalance shafts are different for the two drive types;
- the modular system is designed for an unbalance exciter according to the first drive type, in which the unbalance exciter can be driven by means of a drive device provided outside the exciter housing (1) of the unbalance exciter; and wherein
- the modular system is designed for an unbalance exciter according to the second drive type, in which the unbalance exciter can be driven by means of a drive device (15) provided inside the exciter housing (1) of the unbalance exciter.

2. Unbalance exciter modular system as claimed in claim 1, wherein
- a central installation space (14) is formed between the two bearing points (8) and thus between the two bearing devices (6); and wherein
- the central part (3) is designed to accommodate optionally one of the two different designs of unbalance shafts (2) corresponding to the selected drive type, namely
- a first unbalance shaft design for the first drive type, in which the unbalance mass (5) is provided in the central installation space (14) and in which the unbalance shaft (2) has, outside the central installation space (14), a shaft extension (9), via which the unbalance shaft (2) can be driven by means of a drive provided outside the exciter housing (1); or
- a second unbalance shaft design for the second drive type, in which the unbalance mass is arranged outside the central installation space (14) and in which an electric motor (15) is provided inside the central installation space (14) as a drive for the unbalance exciter.

3. Unbalance exciter modular system as claimed in claim 2, wherein in the first unbalance shaft design the shaft extension (9) of the unbalance shaft (2) carries a torque transmission device (10) in order to introduce a drive torque from the drive.

4. Unbalance exciter modular system as claimed in claim 2 or 3, wherein in the second unbalance shaft design a shaft extension (12) is formed on the unbalance shaft (2) on each of the two end sides, a partial unbalance mass (13) being arranged on each of the shaft extensions.

5. Unbalance exciter modular system as claimed in any one of the preceding claims, wherein in the second unbalance shaft design the electric motor (15) has a rotor (16) which is arranged in a region between the two bearing seats (7) on the unbalance shaft (2).

6. Unbalance exciter modular system as claimed in any one of the preceding claims, wherein in the second unbalance shaft design the electric motor (15) has a stator (17) which is inserted into the central part (3) in a region between the two bearing points (8).

7. Unbalance exciter modular system as claimed in any one of the preceding claims, wherein at least one sub-region having a conical taper (21) is provided in the region of the central part (3) between the two bearing points (8).

8. Unbalance exciter modular system as claimed in any one of the preceding claims, wherein
- the stator (19) can be pressed into the region of the central part (3) between the two bearing points (8); and wherein
- a mounting stop (22) is provided in the region of the central part (3) between the two bearing points (8).

9. Unbalance exciter modular system as claimed in any one of the preceding claims, wherein in the second drive type a terminal device (18) is arranged on the outer side of the central part (3) for feeding electric lines (19) to the stator (17) of the electric motor (15).

10. Unbalance exciter modular system as claimed in any one of the preceding claims, wherein identical bearing devices (6) are provided for both unbalance shaft designs.

11. Unbalance exciter modular system as claimed in any one of the preceding claims, wherein
- at least two or more rotatably mounted unbalance shafts (2) are provided, on which an unbalance mass (5, 13) is provided in each case in order to generate an unbalance, and wherein
- the unbalance shafts (2) are mounted jointly in the exciter housing (1).

12. Vibratory plate for ground compaction, comprising an unbalance exciter modular system as claimed in any one of the preceding claims, comprising a drive device for driving the unbalance exciter, wherein
- in the case of the first drive type the drive device has an internal combustion engine or electric motor provided outside the exciter housing (1) of the unbalance exciter; and wherein
- in the case of the second drive type the drive device has the electric motor (15) provided inside the exciter housing (1) of the unbalance exciter.

## Revendications

1. Système de caisson modulaire d'excitateur à balourd pour un excitateur à balourd pour une plaque vibrante pour le compactage du sol, avec
- deux types différents d'arbres à balourds (2) logés de manière rotative, une masse de balourd (5, 13) étant prévue sur chacun de ceux-ci, pour la production d'un balourd, dans lequel les deux types différents sont prévus pour deux types différents d'entraînement ;
- un boîtier d'excitateur (1) qui entoure l('arbre à balourd (2) au moins partiellement ; et avec
- au moins deux dispositifs de paliers (6) pour le logement rotatif de l'arbre à balourd (2) dans le boîtier d'excitateur (1), dans lequel l'arbre à balourd (2) comprend deux sièges de paliers (7) au niveau desquels les dispositifs de paliers (6) logent l'arbre à balourd (2) ; dans lequel
- le boîtier d'excitateur (1) comprend une partie centrale (3) ;
- le boîtier d'excitateur (1) comprend deux parties frontales (4) disposée frontalement par rapport à la partie centrale (3) ;
- la partie centrale (3) présente un évidement cylindrique dans lequel, pour chacun des dispositifs de palier (6), un point d'appui est prévu (8) ;
- la partie centrale (3) est conçue pour loger au choix un des arbres à balourd (2) pour un des deux types différents d'entraînement, à savoir un premier type d'entraînement et un deuxième type d'entraînement ;
- la partie centrale est identique pour les deux types d'entraînement, tandis que les arbres à balourds respectifs sont différents pour les deux types d'entraînement ;
- le système de caisson modulaire pour un excitateur à balourd est conçu selon le premier type d'entraînement, dans lequel l'excitateur à balourd peut être entraîné par un dispositif d'entraînement prévu à l'extérieur du boîtier d'excitateur (1) de l'excitateur à balourd ; et dans lequel
- le système de caisson modulaire pour un excitateur à balourd est conçu selon le deuxième type d'entraînement, dans lequel l'excitateur à balourd peut être entraîné par un dispositif d'entraînement (15) prévu à l'intérieur du boîtier d'excitateur (1) de l'excitateur à balourd.

2. Système de caisson modulaire d'excitateur à balourd selon la revendication 1, dans lequel
- entre les deux points d'appui (8) et donc entre les deux dispositifs de paliers (6), est réalisé un espace central (14) ; et dans lequel
- la partie centrale (3) est conçue pour loger, en fonction du type d'entraînement choisi, un de deux types différents d'arbres à balourd (2), à savoir
- pour le premier type d'entraînement, un premier type d'arbre à balourd, dans lequel la masse de balourd (5) est prévue dans l'espace central (14) et, dans lequel, l'arbre à balourd (2) comprend, à l'extérieur de l'espace central (14), un prolongement d'arbre (9) par l'intermédiaire duquel l'arbre à balourd (2) peut être entraîné par un entraînement prévu à l'extérieur du boîtier d'excitateur (1) ; ou
- pour le deuxième type d'entraînement, un deuxième type d'arbre à balourd, dans lequel la masse de balourd est disposée à l'extérieur de l'espace central (14) et dans lequel, à l'intérieur de l'espace central (14), est prévu un moteur électrique (15) pour l'entraînement de l'excitateur à balourd.

3. Système de caisson modulaire d'excitateur à balourd selon la revendication 2, dans lequel, dans le premier type d'arbre à balourd, le prolongement d'arbre (9) de l'arbre à balourd (2) supporte un dispositif de transmission de couple (10) pour l'application d'un couple d'entraînement par l'entraînement.

4. Système de caisson modulaire d'excitateur à balourd selon la revendication 2 ou 3, dans lequel, dans le deuxième type d'arbre à balourd, sur l'arbre à balourd (2), sur les deux faces frontales, est prévu respectivement un prolongement d'arbre (12) dans lequel est disposée respectivement une masse de balourd partielle (13).

5. Système de caisson modulaire d'excitateur à balourd selon l'une des revendications précédentes, dans lequel, dans le deuxième type d'arbre à balourd, le moteur électrique (15) comprend un rotor (16) qui est disposé dans une zone entre les deux sièges de paliers (7) sur l'arbre à balourd (2).

6. Système de caisson modulaire d'excitateur à balourd selon l'une des revendications précédentes, dans lequel, dans le deuxième type d'arbre à balourd, le moteur électrique (15) comprend un stator (17) qui est inséré dans une zone entre les deux points d'appui (8) dans la partie centrale (3).

7. Système de caisson modulaire d'excitateur à balourd selon l'une des revendications précédentes, dans lequel, dans la zone de la partie centrale (3) entre les deux points d'appui (8) est prévue au moins une zone partielle avec un rétrécissement conique (21).

8. Système de caisson modulaire d'excitateur à balourd selon l'une des revendications précédentes, dans lequel
- le stator (19) peut être pressé dans la zone de la partie centrale (3) entre les deux points d'appui (8) ; et dans lequel
- dans la zone de la partie centrale (3) entre les deux points d'appui (8), est prévue une butée de montage (22).

9. Système de caisson modulaire d'excitateur à balourd selon l'une des revendications précédentes, dans lequel, dans le deuxième type d'entraînement, sur la face externe de la partie centrale (3), est disposé un dispositif de serrage (18) pour amener des conduites électriques (19) vers le stator (17) du moteur électrique (15).

10. Système de caisson modulaire d'excitateur à balourd selon l'une des revendications précédentes, dans lequel, pour les deux types d'arbres à balourds, des dispositifs de paliers (6) identiques sont prévus.

11. Système de caisson modulaire d'excitateur à balourd selon l'une des revendications précédentes, dans lequel
- au moins deux arbres à balourds (2) logés de manière rotative ou plus sont prévus, sur lesquels est prévue respectivement une masse de balourd (5, 13), pour la production d'un balourd ; et dans lequel
- les arbres à balourds (2) sont logés ensemble dans le boîtier d'excitateur (1).

12. Plaque vibrante pour le compactage du sol, avec un système de caisson modulaire d'excitateur à balourd selon l'une des revendications précédentes, avec un dispositif d'entraînement pour l'entraînement de l'excitateur à balourd, dans lequel
- dans le cas du premier type d'entraînement, le dispositif d'entraînement comprend un moteur à combustion ou un moteur électrique prévu à l'extérieur du boîtier d'excitateur (1) de l'excitateur à balourd ; et dans lequel
- dans le cas du deuxième type d'entraînement, le dispositif d'entraînement comprend le moteur électrique (15) prévu à l'intérieur du boîtier d'excitateur (1) de l'excitateur à balourd.
